# FASCICULE DE BREVET EUROPEEN

(11) **EP 2 718 730 B1**
(45) Date de publication et mention de la délivrance du brevet: **18.11.2015**
(21) Numéro de dépôt: 12729087.2
(22) Date de dépôt: 08.06.2012
(51) Int. Cl.: G01P 3/36, B61L 25/02, G06T 7/20, G01C 22/00, G01C 23/00

(54) **DISPOSITIF DE MESURE DE VITESSE ET DE POSITION D'UN VÉHICULE SE DÉPLAÇANT LE LONG D'UNE VOIE DE GUIDAGE, PROCÉDÉ ET PRODUIT PROGRAMME D'ORDINATEUR CORRESPONDANT**
VORRICHTUNG ZUR MESSUNG DER GESCHWINDIGKEIT UND POSITION EINES SICH ENTLANG EINER FÜHRUNGSSPUR BEWEGENDEN FAHRZEUGES, VERFAHREN UND COMPUTERPROGRAMMPRODUKT DAFÜR
DEVICE FOR MEASURING SPEED AND POSITION OF A VEHICLE MOVING ALONG A GUIDANCE TRACK, METHOD AND COMPUTER PROGRAM PRODUCT CORRESPONDING THERETO

(30) Priorité: 09.06.2011 FR 1155053
(43) Date de publication de la demande: 16.04.2014
(73) Titulaire: Desbordes, Jean-Luc, 35700 Rennes (FR); J.M.R. PHI, 35830 Betton (FR)
(72) Inventeur: DESBORDES, Jean-Luc, F-35700 Rennes (FR); CHÂTEL, Nicolas, F-35510 Cesson-Sévigné (FR)
(74) Mandataire: Vidon Brevets & Stratégie
(86) Numéro de dépôt international: PCT/EP2012/060880
(87) Numéro de publication internationale: WO 2012/168424

(56) Documents cités:
- WO-A1-2007/091072
- FR-A1- 2 673 901
- US-A1- 2004 221 790
- US-A1- 2007 282 563

## Description

### 1. Domaine de l'invention

La présente invention se rapporte à un procédé de localisation et/ou de mesure de vitesse d'un véhicule se déplaçant le long d'une voie de guidage, par exemple une voie de chemin de fer formée de deux rails, et à un dispositif équipant un tel véhicule, notamment une locomotive.

### 2. Techniques de l'art antérieur

Le développement des systèmes actuels de surveillance et de gestion du trafic ferroviaire doit répondre aux exigences du système européen de contrôle et de surveillance du trafic ferroviaire (ERTMS) qui vise à harmoniser la signalisation et le contrôle des vitesses pour le transport ferroviaire en Europe et, par conséquent, de rendre plus sûre la circulation des trains.

Pour améliorer les conditions de circulation des trains sur un réseau de chemins de fer, ainsi que la sécurité de l'ensemble du trafic, il est nécessaire de connaître avec précision la vitesse et l'emplacement (position) de chaque train sur le réseau ferré.

Pour répondre à ce besoin, les trains sont équipés d'une combinaison de capteurs d'odométrie de différentes natures, tels que des accéléromètres, des radars Doppler et des capteurs de roues. Cette solution s'avère coûteuse et nécessite la mise en oeuvre d'algorithmes complexes de traitement des signaux mesurés. Ces capteurs effectuent des mesures dont la précision n'est toutefois pas satisfaisante du fait notamment de leur sensibilité aux conditions climatiques, aux vitesses faibles, aux vibrations, à la configuration du train et du sol, au glissement des roues du train sur les rails. En outre, les mesures issues de tels capteurs d'odométrie sont sujettes à des dérives. Par ailleurs, certains de ces capteurs étant fixés sous caisse, ils sont sujets aux détériorations (projections de cailloux par exemple).

Pour remédier à ces dérives et améliorer la précision des mesures de position des trains, il a été proposé de « recaler » les mesures de position obtenues à partir des capteurs d'odométrie avec des systèmes au sol, sous la forme d'émetteurs/balises (appelés « Eurobalises ») qui sont fixés à intervalles réguliers (tous les 1,5 kms en moyenne, en Belgique par exemple) sur la voie ferrée. Une telle balise est activée lors du passage du train et transmet à ce dernier sa localisation exacte par rapport à un référentiel absolu lié à la voie. Le calculateur de bord du train corrige ensuite l'erreur de position du train en recalant la position donnée par odométrie avec celle de la dernière balise rencontrée.

Un inconvénient de cette solution est que les balises sont posées sur la voie entre les rails. Sans surveillance, elles sont ainsi vulnérables aux actes de vandalisme. Elles sont également soumises à des contraintes mécaniques relativement importantes au passage d'un train, pouvant occasionner des défaillances. Hormis le coût engendré par la maintenance de ces balises, il existe aussi un coût lié à l'installation de ces balises sur tout le réseau ferroviaire et à la gestion des stocks. De plus, cette solution pose un problème de sécurité puisque si une balise venait à ne plus fonctionner, l'intervalle entre deux recalages de mesures de position issues des capteurs d'odométrie serait augmenté.

Dans une alternative, il a été proposé d'équiper le train d'un récepteur GPS pour fiabiliser les mesures de tels capteurs d'odométrie. Toutefois, il faut pour cela que le récepteur GPS puisse capter en continu les signaux des satellites afin de permettre la localisation du train, ce qui est rendu difficile dans les tunnels, les couloirs urbains et les vallées très encaissées des montagnes.

Une autre solution basée sur un système optique, et commercialisée sous le nom de Correvit®, consiste à équiper le train de capteurs reposant sur une technologie LED. Cependant, un inconvénient de cette approche est que ces capteurs sont relativement fragiles et vulnérables aux conditions environnementales, étant placés sous caisse à proximité du rail de chemin de fer.

Encore une autre solution pour mesurer la « distance parcourue » d'un train est décrite dans le document de brevet FR 2 673 901. Cette solution consiste à fixer des pistes magnétisables, tout le long de la voie ferrée, et à mettre en oeuvre, par rapport au sens de déplacement du véhicule, au moins une bobine de marquage magnétique de telles pistes, alimentée par un générateur d'impulsions de courant électrique et située sur le boggie avant de la locomotive, et au moins un détecteur de ce marquage magnétique sur le boggie arrière de la locomotive, la bobine et le détecteur étant éloignés d'une distance prédéterminée l'un de l'autre. Il est en outre prévu des moyens pour commander un nouveau marquage après chaque détection et des moyens pour comptabiliser le nombre de marquages détectés représentatifs de la distance parcourue par la locomotive (et donc la position de la locomotive sur la voie ferrée).

Cependant, un inconvénient de cette solution est que les moyens sont coûteux à mettre en oeuvre et à maintenir en fonctionnement car soumis à d'importantes contraintes mécaniques.

Il est également connu de mettre en oeuvre un dispositif de capture d'images placé à une extrémité du train, les images étant par la suite analysées pour déterminer la vitesse et la position du train voir par exemple le document WO 2007/0282563. L'analyse des images consiste en un repérage d'éléments, comme par exemple des codes à barres placés sur le sol, le long de la voie, à des emplacements connus a priori, et en une comparaison des codes repérés avec des codes stockés dans une base de données, permettant de localiser spatialement le train, voir par exemple le document WO 2007/091072.

Un inconvénient de cette solution est qu'elle nécessite de placer des codes à barre sur tout le réseau ferroviaire, ce qui s'avère coûteux à mettre en oeuvre.

Un autre inconvénient de cette solution est qu'elle nécessite la gestion d'une base de données. En outre, l'analyse de l'image et la comparaison avec des données stockées dans la base de données requièrent un temps de traitement important.

En d'autres termes, les solutions actuelles de mesure de position et de vitesse des trains ne donnent pas entièrement satisfaction.

En effet, elles requièrent la mise en oeuvre d'équipements de détection qui sont :
- issus de technologies différentes et qui mesurent des grandeurs de natures différentes, ce qui nécessite l'implémentation d'algorithmes complexes de traitement des signaux mesurés, et engendre des temps de traitement des données relativement longs ;
- embarqués (sous caisse ou dans la locomotive) ou au sol (entre les rails ou le long de la voie), ce qui les rend sujets aux détériorations ;
- coûteux (notamment pour leur maintenance), peu précis (notamment pour les vitesses faibles du train), et sujets aux dérives.

### 3. Objectifs de l'invention

L'invention a notamment pour objectif de pallier ces inconvénients de l'art antérieur.

Plus particulièrement, la présente invention a pour objectif de proposer un procédé de mesure précis et fiable de la vitesse de véhicules se déplaçant sur une voie de guidage, et le cas échéant, leur position, sans nécessiter l'implantation sur leur parcours de dispositifs spécifiques, tels que des balises.

La présente invention a également pour objectif de proposer un dispositif de mise en oeuvre de ce procédé, dispositif qui soit le moins onéreux possible, implantable sur tous types de véhicules, et qui puisse fonctionner correctement quelles que soient les conditions environnementales.

Un autre objectif de l'invention est de proposer une solution de mesure de vitesse et de position de véhicules se déplaçant sur une voie de guidage qui réponde aux exigences d'interopérabilité et de sécurité du système ERTMS notamment.

### 4. Exposé de l'invention

Ces objectifs, ainsi que d'autres qui apparaîtront par la suite sont atteints à l'aide d'un dispositif de mesure de vitesse et/ou de position d'un véhicule se déplaçant le long d'une voie de guidage, de jour comme de nuit, et ce quelles que soient les conditions climatiques.

Selon l'invention, un tel dispositif comprend :
- au moins un appareil de capture d'images délivrant une séquence d'images numériques d'un environnement dudit véhicule ;
- des moyens de détermination du mouvement apparent d'au moins un indice visuel, appelé primitive, entre deux images délivrées par ledit appareil de capture d'images, afin de déterminer le mouvement apparent dudit au moins un indice, mettant en oeuvre :
   - des moyens de simplification desdites images, à l'aide d'au moins un modèle dudit environnement, permettant la détection dudit au moins un indice visuel dans les images simplifiées;
   - des moyens de prédiction d'une zone d'image dans laquelle ledit indice se trouvera dans une image suivante ;
   - des moyens d'extraction d'un desdits indices visuels dans ladite zone d'image ;
   - des moyens d'estimation d'un déplacement, par comparaison de la position réelle dudit indice dans une image courante et une image précédente ;
- des moyens d'estimation de vitesse et/ou de la position dudit véhicule à partir dudit mouvement apparent dudit au moins un indice.

Le dispositif de l'invention permet de mesurer la vitesse et la position d'un véhicule, tel un train, se déplaçant le long d'une voie de guidage (roulant sur une voie ferrée par exemple) en déterminant le mouvement dans une succession d'images délivrées par un appareil de capture d'images qui peut être notamment, dans un mode de réalisation, un capteur d'imagerie optique, sous la forme d'une caméra.

Le dispositif de l'invention met en oeuvre un traitement d'images issues d'une même séquence, prise en milieu structuré. Il extrait dans l'image, en temps réel ou quasi temps réel, les primitives pertinentes de la projection (scène visuelle) de l'environnement ferroviaire, constitué de la voie de guidage et d'objets proches, effectue le suivi et calcule le mouvement de défilement dans l'image de ces dernières. Le calcul de la vitesse et de la « distance parcourue » du véhicule est enfin rendu possible par une connaissance a priori de certaines grandeurs réelles de l'environnement ferroviaire (scène réelle), le modèle de l'environnement pouvant, par exemple, être un modèle dynamique simplifié.

Selon les cas, ledit au moins un appareil de capture d'images appartient au groupe comprenant notamment (liste non exhaustive) :
- les appareils de prise de vues ;
- les caméras thermiques ;
- les caméras magnétiques, etc.

L'invention permet ainsi de mesurer la vitesse et la « distance parcourue » (ou la position relative) d'un train par référence interne, dans un environnement ferroviaire connu partiellement à priori, à partir d'uri ou de plusieurs appareils de capture d'images (ou capteurs d'imagerie) adaptés, par exemple, au spectre visible (appareil de prise de vues), au spectre infrarouge (capteur thermique), et/ou aux rayonnements magnétiques (caméra magnétique).

Il est à noter que le ou les appareils de capture d'images mis en oeuvre dans le dispositif de l'invention permettent d'obtenir, de jour comme de nuit, et ce quelles que soient les conditions climatiques, une séquence d'images vidéo, thermiques, magnétiques, ou autres, à partir de laquelle le calcul de la vitesse du véhicule et de la « distance parcourue » par ce dernier peut être effectué selon le principe de l'invention.

En d'autres termes, l'appareil de capture d'images est un dispositif de capture des éléments structurants du milieu dans lequel le véhicule se déplace (par imagerie optique, thermique, acoustique, magnétique ou autre).

Par ailleurs, les images délivrées par le ou les appareils de capture d'images et traitées par le dispositif de l'invention peuvent être des images de la scène située en avant ou en arrière du véhicule.

Dans une mise en oeuvre particulière, ledit au moins un indice est représentatif d'au moins une caractéristique géométrique de ladite voie de guidage, telle que le rayon de courbure, l'écartement entre les rails de la voie, l'alignement.

Avantageusement, ledit au moins un indice est représentatif d'au moins une caractéristique géométrique d'au moins un objet situé le long de la voie de guidage, telle que la verticalité des poteaux.

Ainsi, l'invention utilise des indices visuels ou caractéristiques, appelées primitives, qui sont des objets extraits de l'image contenant de manière concise une information importante pour son analyse (en général, ces indices sont des contours ou des régions de l'image), et dont l'évolution dans le temps et dans l'espace est régi par les propriétés de certaines grandeurs réelles du milieu ferroviaire judicieusement choisies, et réputées se conserver ou changer lentement tout au long d'une même séquence d'images (écartement entre les rails de la voie, courbure de la voie, verticalité des poteaux le long de la voie, etc).

On prévoit ainsi des zones de détection de la voie et des objets qui longent la voie.

Les primitives, extraites des images, sont directement utilisées par l'invention, ce qui permet ainsi de s'affranchir totalement de la phase d'interprétation des informations visuelles, coûteuse en temps de calcul dans le cas de scènes complexes.

En d'autres termes, le fait d'utiliser les primitives directement dans l'image permet de réduire considérablement le volume de données à traiter et le temps d'exécution des algorithmes dans le processus d'estimation de mouvement.

Dans un mode de réalisation de l'invention, le dispositif met en oeuvre un modèle dudit véhicule et un modèle dudit appareil de capture d'images.

L'association des modèles du véhicule et de l'appareil de capture d'images, le modèle de l'environnement, les éléments dynamiques de l'ensemble de la voie de guidage et du véhicule, comme les données relatives à la tâche à exécuter (se déplacer sur la voie de guidage en l'occurrence), sont intégrés, sous forme de paramètres et d'algorithmes, à l'organe de calculs du dispositif de l'invention, qui reçoit, en fonctionnement, les informations sur l'état courant du véhicule (informations proprioceptives) et les informations sur l'état courant de l'environnement (informations extéroceptives).

Les modèles du véhicule et de l'appareil de capture d'images sont associés dans le processus de détermination des paramètres internes de l'appareil de capture d'images (auto-calibrage) monté sur le véhicule se déplaçant sur la voie de guidage. Le modèle de l'environnement (voie de guidage et objets le long de la voie) intervient en phase d'extraction des indices visuels dans l'image (phase de simplification de l'image). Les éléments dynamiques de l'ensemble de la voie de guidage et du véhicule interviennent dès la première estimation de vitesse et de « distance parcourue » du véhicule se déplaçant sur la voie de guidage.

Tous ces éléments de modélisation participent directement à l'expression de la relation entre les variations des informations visuelles dans l'image et les mouvements dans l'espace réel de l'appareil de capture d'images monté sur le véhicule se déplaçant sur la voie de guidage (matrice d'interaction).

Dans une mise en oeuvre particulière, les moyens de suivi et de prédiction mettent en oeuvre un filtre de Kalman.

La contrainte de disposer en permanence d'une mesure fiable et disponible de la vitesse et de la « distance parcourue » du train en mouvement impose la mise en oeuvre d'un système de suivi et de prédiction, par filtrage de Kalman par exemple, d'un ensemble de notions extraites de l'image, telles que les zones d'intérêt qui matérialisent les primitives verticales pertinentes, et certaines caractéristiques géométriques de la voie ferrée (rayon de courbure, écartement, alignement), dont le comportement est connu a priori via des modèles et dont l'estimation précédente est encore en mémoire (c'est-à-dire stockée dans une mémoire de stockage du dispositif).

Le dispositif de l'invention privilégie des modèles simples mais très rapides d'exécution et compense les erreurs de modélisation par un système de suivi et de prédiction dans l'image par filtrage de Kalman.

Un filtre de Kalman permet de suivre et de prédire un ensemble de notions extraites de l'image, à partir des contours des objets.

De manière classique, le filtre de Kalman a deux phases distinctes, à savoir une phase de prédiction et une phase de mise à jour. La phase de prédiction utilise l'état estimé de l'instant précédent pour produire une estimation de l'état courant. Dans l'étape de mise à jour, les observations de l'instant courant sont utilisées pour corriger l'état prédit dans le but d'obtenir une estimation plus précise.

L'invention est avantageuse en ce sens qu'elle ne nécessite pas de transformer les images délivrées par la caméra (gain de temps). Certaines caractéristiques de la voie ferrée et du véhicule représentent des éléments suffisamment stables pour être exploitées comme pré-requis dans l'estimation de vitesse et de position.

Le dispositif de l'invention intervient dans le cadre de la sécurité par l'amélioration de la précision et de la fiabilité des mesures de vitesse et de position, et par la rapidité d'exécution d'algorithmes simples et robustes, liés non pas à des modèles spécifiques, difficiles à obtenir des constructeurs, mais à des modèles dont les paramètres sont génériques et stables.

L'invention ne nécessite pas que des équipements supplémentaires soient rajoutés le long de la voie pour pouvoir estimer la vitesse et la position du train. Il se sert de l'infrastructure existante suffisamment riche d'informations pertinentes. Il ne se sert d'aucune base de données de carte du réseau ferroviaire, ce qui lui permet d'être fonctionnel, de manière autonome, sur tous les réseaux ferroviaires du monde entier.

Dans un mode de réalisation de l'invention, le dispositif comprend un capteur d'inclinaison apte à générer un signal représentatif de l'inclinaison de l'appareil de capture d'images et des moyens de rotation d'une image délivrée par ledit appareil de capture d'images selon un angle fonction dudit signal généré.

De façon avantageuse, ledit capteur d'inclinaison met en oeuvre un filtre de Deriche.

La mise en oeuvre d'une caméra utilisée en tant que capteur optique de mesure de vitesse et de position d'un train nécessite une stabilisation des images délivrées par la caméra.

En effet, lorsque le train se déplace, il subit des dénivellations qui amènent la caméra embarquée à capturer une scène bruitée, donnant une séquence d'images dites « tremblotantes ». Les techniques actuelles d'analyse de mouvement dans une séquence d'images sont sensibles aux perturbations extérieures. Ainsi, quand la trajectoire effective du capteur visuel est bruitée, cette erreur de déplacement se répercute irrémédiablement sur les mesures tridimensionnelles de l'environnement. Enfin, le mouvement détecté se compose d'un mouvement relatif au train (mouvement global) qui, lui, se compose du mouvement propre du train (egomotion) et d'un mouvement dit de « bruit » (tangage et roulis).

Le mouvement, qualifié de bruit, peut être atténué ou éliminé directement à partir de l'électronique de la caméra, dans les cas de faibles amplitudes, mais aussi par compensation à partir d'un dispositif mécanique servant de support à la caméra, dans les cas de fortes amplitudes.

Le mouvement propre du train est déterminé à partir de méthodes de traitement d'images utilisant les champs de vitesse liés à l'environnement. Le principe de ces méthodes consiste à trouver, à partir d'une séquence de projections planes de ce même environnement, une certaine cohérence entre la notion de défilement dans l'image et celle de mouvement propre du train (ou egomotion).

Dans une certaine zone de l'image, choisie au préalable, l'étude du mouvement est liée à la détection de segments de droites de direction privilégiée, verticale par exemple, et de leur vitesse.

Une approche consiste à utiliser un filtre de détection de verticales. A ce titre, un filtre de Deriche modifié permet de déterminer l'angle de rotation de la caméra autour de son axe de visée, appelé angle du plus grand nombre de pixels dans l'image.

Afin d'être certain qu'une verticale dans l'image corresponde bien à une arête verticale d'un objet de la scène, sans connaître la position angulaire de la caméra dans un repère absolu fixe, l'idée est d'extraire non pas les droites verticales de l'image, mais celles dont la direction est la plus représentée dans l'image et assimilée à la direction de la pesanteur. Celles-ci sont extraites préalablement selon une direction privilégiée, déterminée par un filtre de Deriche modifié, qui permet de calculer l'angle du plus grand nombre de pixels dans l'image (c'est-à-dire l'angle de la direction la plus représentée dans l'image) afin d'extraire dans l'image les contours de même direction que cet angle et de fournir au système de l'invention la notion de verticalité et donc de référence interne propre.

Dans le cas où un tel filtre de Deriche modifié fournirait cette information à un dispositif de dérotation de l'image, une verticale dans l'image obtenue après dérotation correspondrait alors à une arête verticale d'un objet de la scène réelle.

Une telle approche permet ainsi de reconnaître et de localiser dans l'image les verticales, ou les proches verticales. Chacune d'entre elles est alors inscrite dans une zone d'intérêt, de forme rectangulaire, qui fournit des renseignements sur sa longueur, sa position et son erreur de verticalité.

Le dispositif de l'invention fournit ainsi au train une notion d'équilibre, d'une part en déterminant l'angle de rotation de l'image par rapport à son propre référentiel, et d'autre part en amortissant presque naturellement certaines perturbations extérieures, dues à des terrains accidentés, qui empêchent, encore de nos jours, la visionique embarquée sur un véhicule mobile, d'analyser correctement le mouvement dans un environnement naturel.

Une telle solution permet non seulement de mesurer les déstabilisations temporelles subies par la caméra au cours du déplacement du train sans mettre en oeuvre un capteur d'inclinaison, tel un gyroscope ou un inclinomètre, mais aussi de différencier une rotation dans la scène d'une rotation de la caméra qui filme la scène.

Dans une alternative, de tels capteurs d'inclinaison peuvent toutefois être intégrés au dispositif de l'invention afin de répondre, par exemple, à des contraintes de redondance d'information dans un cadre sécuritaire.

En d'autres termes, les images de la scène sont acquises et sont stabilisées afin de pouvoir en analyser le mouvement apparent. La stabilisation des images fournit la notion d'équilibre qui manque à l'odométrie pour lier, à tout véhicule en circulation, son propre référentiel.

Préférentiellement, le dispositif met en oeuvre une matrice d'interaction liant les mouvements de l'appareil de capture d'images dans l'espace réel aux mouvements dudit au moins un indice dans lesdites images.

De façon avantageuse, le dispositif comprend des moyens de calibrage dudit appareil de capture d'images.

Ceci permet de faire le lien dimensionnel entre l'environnement 3D et le 2D.

Le principe de l'invention est une adaptation à l'industrie ferroviaire de la commande par asservissement visuel des robots mobiles en milieu structuré. Pour ce faire :
- la commande par asservissement visuel est déportée non seulement sur le conducteur du véhicule roulant dont le rôle principal est de réguler la vitesse du véhicule selon les indications du tableau de bord, mais aussi sur l'EVC (« European Vital Computer » en anglais, c'est-à-dire l'ordinateur embarqué) qui déclenche un freinage d'arrêt d'urgence lorsque le comportement du conducteur est jugé dangereux et que le niveau de sécurité requis n'est plus atteint ;
- les grandeurs commandées sont essentiellement la vitesse et l'accélération du véhicule roulant, la direction de celui-ci étant contrainte par la courbure de la voie de guidage ;
- les images de la scène sont acquises par une caméra unique, et sont stabilisées afin de pouvoir en analyser le mouvement apparent ;
- la stabilisation des images fournit ainsi la notion d'équilibre qui manque à l'odométrie pour lier, à tout véhicule en circulation, son propre référentiel.

Selon un mode de réalisation particulier de l'invention, le dispositif comprend des moyens d'affichage d'images numériques dudit environnement qui sont délivrées par ledit appareil de capture d'images.

Avantageusement, lesdites images sont affichées sur au moins un écran LCD, le pare-brise dudit véhicule, ou sur un miroir transparent situé devant le pare-brise dudit véhicule.

Dans un mode de réalisation particulier de l'invention, le dispositif comprend des moyens d'entrée d'un itinéraire donné.

De façon avantageuse, le dispositif comprend des moyens de stockage d'au moins une carte d'un réseau de transport.

Préférentiellement, le dispositif comprend des moyens d'indication du positionnement géographique dudit véhicule.

L'invention concerne par ailleurs un procédé de mesure de vitesse et/ou de position d'un véhicule se déplaçant le long d'une voie de guidage, de jour comme de nuit, et ce quelles que soient les conditions climatiques.

Selon l'invention, un tel procédé comprend les étapes suivantes :
- obtention d'une séquence d'images numériques d'un environnement dudit véhicule par le biais d'un appareil de capture d'images ;
- détermination du mouvement apparent d'au moins un indice visuel, appelé primitive, entre deux images délivrées par ledit appareil de capture d'images, afin de déterminer le mouvement apparent dudit au moins un indice visuel, comprenant les étapes suivantes :
   - simplification desdites images, à l'aide d'au moins un modèle dudit environnement, permettant la détection dudit au moins un indice visuel dans les images simplifiées ;
   - prédiction d'une zone d'image dans laquelle ledit indice visuel se trouvera dans une image suivante ;
   - extraction d'un desdits indices visuels dans ladite zone d'image ;
   - estimation d'un déplacement, par comparaison de la position réelle dudit indice visuel dans une image courante et une image précédente ;
- estimation de vitesse et/ou de la position dudit véhicule à partir dudit mouvement apparent dudit au moins un indice visuel.

En outre, l'invention concerne un produit programme d'ordinateur téléchargeable depuis un réseau de communication et/ou stocké sur un support lisible par ordinateur et/ou exécutable par un microprocesseur, qui comprend des instructions de code de programme pour l'exécution du procédé décrit précédemment dans le dispositif décrit précédemment.

### 5. Liste des figures

D'autres caractéristiques et avantages de l'invention apparaîtront plus clairement à la lecture de la description suivante d'un mode de réalisation particulier de l'invention, donné à titre de simple exemple illustratif et non limitatif et des dessins annexés, parmi lesquels :
- la figure 1 représente de façon schématique, en perspective, le dispositif de l'invention selon un mode de réalisation;
- la figure 2 représente un schéma fonctionnel de la mise en oeuvre du dispositif de l'invention ;
- la figure 3 illustre les différentes étapes de l'algorithme de suivi mis en oeuvre dans le dispositif de l'invention ;

- la figure 4 présente un exemple de caractérisation de proches verticales dans une image telle que mise en oeuvre dans le dispositif de l'invention ;
- la figure 5 présente le principe général de mesure de la vitesse et de « distance parcourue » (position) d'un train selon l'invention ;
- la figure 6 illustre les différentes étapes d'extraction des proches verticales dans une image telle que mise en oeuvre dans le dispositif de l'invention ;
- la figure 7 illustre le principe d'interaction entre une scène réelle et l'image délivrée par l'appareil de prise de vue du dispositif de l'invention ;
- les figures 8A à 8E présentent différentes vues dont découlent les modèles géométriques d'un véhicule roulant (figures 8B-8E) et d'une voie de guidage (figure 8A) ;

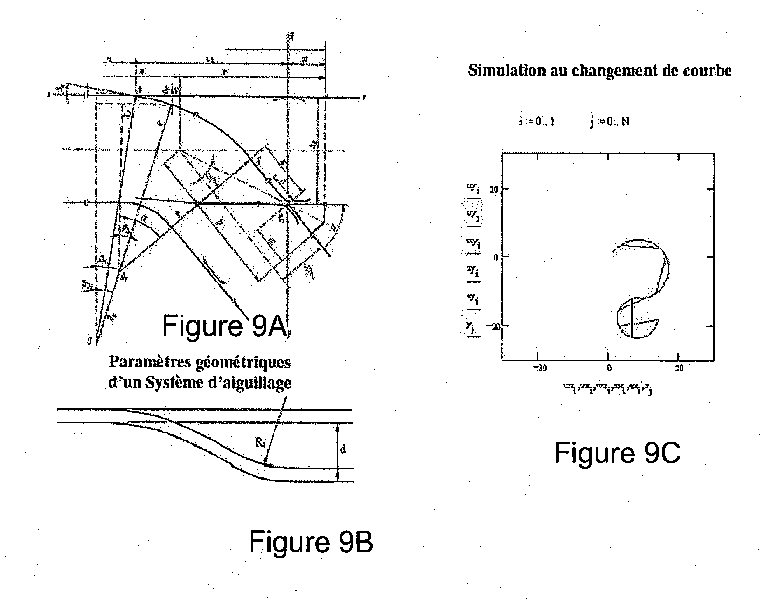

- les figures 9A à 9C présentent un modèle géométrique d'un système d'aiguillage de voie de guidage (figures 9A-9B) et la simulation de l'évolution spatiale d'une locomotive, réduite à un simple segment de longueur constante entre les boggies, au passage d'un changement de courbure d'une voie de guidage, modélisée par son axe d'alignement (figure 9C) ;

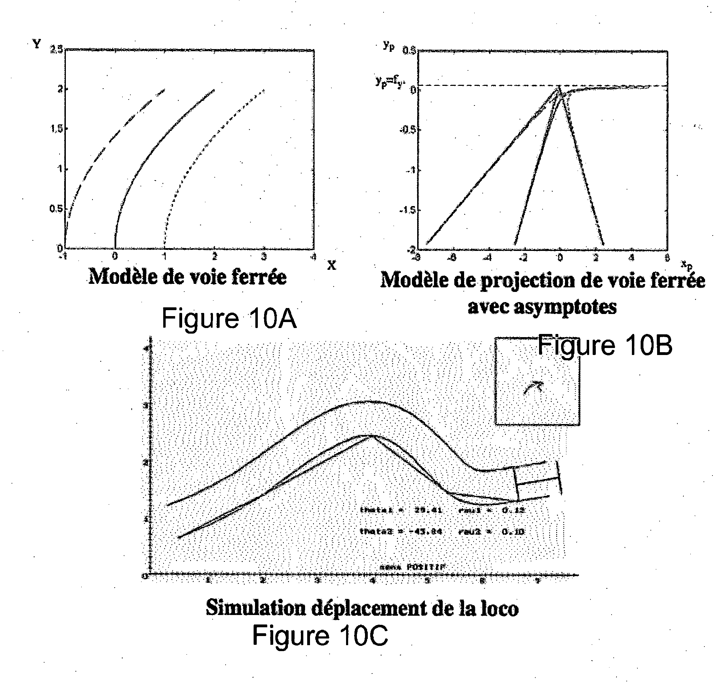

- les figures 10A à 10C présentent un modèle géométrique plane de la voie de guidage, vue du dessus (figure 10A) et en projection perspective avec ses asymptotes (figure 10B), et une simulation du déplacement d'une locomotive (figure 10C) ;
- les figures 11A à 11C illustrent la notion de couloir de navigation qui est défini par le mouvement apparent dans l'image de l'extrémité inférieure des deux verticales les plus proches de l'appareil de prise de vue du dispositif de l'invention.

### 6. Description détaillée d'un mode de réalisation de l'invention

On décrit ci-après un mode de réalisation de l'invention, selon lequel le véhicule roulant dont la vitesse et la position sont mesurées par le biais du dispositif (capteur) de l'invention est un train se déplaçant sur une voie de chemin de fer formée de deux rails. Un tel dispositif peut bien entendu être mis en oeuvre sur d'autres types de véhicules se déplaçant sur une voie de guidage.

Dans l'exemple qui suit, le dispositif de l'invention mesure la vitesse et la position d'un train à partir d'images de la scène située en avant du train obtenues par le biais d'un appareil de prise de vues.

Dans une alternative, cette vitesse peut toutefois être mesurée à partir d'images de la scène située en arrière du train.

### 6.1 Principe de l'invention

Le dispositif de l'invention permet de mesurer la vitesse et la « distance parcourue » d'un train, par référence interne, dans un environnement ferroviaire connu partiellement a priori, à partir d'un système de vision monoculaire embarqué. Pour ce faire, le dispositif de l'invention met en oeuvre un traitement d'images issues d'une même séquence, prise en milieu structuré. Il extrait dans l'image, en temps réel, ou quasi temps réel, les primitives pertinentes de la projection de la voie de guidage (scène visuelle), effectue le suivi et calcule le mouvement de défilement dans l'image de ces dernières. Le calcul de la vitesse et de la «distance parcourue» du véhicule est enfin rendu possible par une connaissance a priori de certaines grandeurs réelles de la voie de guidage (scène réelle).

Le dispositif est posé sur le tableau de bord du véhicule, et quelques paramètres, dépendant du véhicule, sont saisis avant de commencer toute estimation de vitesse et de position (on parle classiquement de dispositif « put, plug and play » eh anglais).

L'utilisation du dispositif de l'invention dans un véhicule roulant permet d'augmenter de manière significative la sécurité ferroviaire par :
- l'amélioration de la précision et de la fiabilité des mesures de vitesse et de position, et
- par la rapidité d'exécution d'algorithmes simples et robustes, liés non pas à des modèles spécifiques, difficiles à obtenir des constructeurs, mais à des modèles dont les paramètres sont génériques et stables.

Le dispositif de l'invention répond parfaitement à une démarche environnementale et de réduction des coûts par une économie importante du nombre d'équipements qui sont traditionnellement posés sur rails pour pallier aux dérives de meures des instrumentes de bord actuels par des recalages réguliers.

### 6.2 Capteur de mesure de vitesse et de position

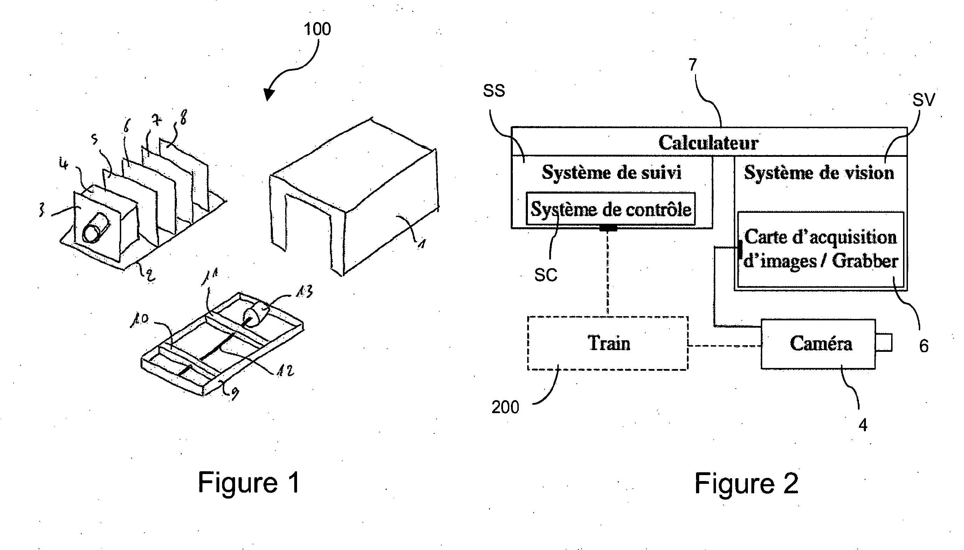

Comme illustré en figure 1, le dispositif-capteur 100 de l'invention se présente sous la forme d'un boîtier compact comprenant un couvercle de boîtier 1, une plaque de fond 2 et un dispositif amovible d'auto-calibrage 9.

Le couvercle 1 est doté sur une de ses faces d'un afficheur, du type LCD par exemple, qui permet au conducteur de visualiser la vitesse du train à mesure que cette vitesse est mesurée par le dispositif de l'invention.

Le dispositif amovible d'auto-calibrage 9 comprend deux entretoises amovibles 10 et 11, sensiblement parallèles qui sont traversées par une tige ou vis sans fin 12 pilotée par un moteur 13.

Sur la plaque de fond 2 sont montées respectivement une caméra 4 anti-vibration et anti-éblouissement par le biais d'une plaque de fixation 3, une carte de prétraitement 5 (filtrage, labellisation,...), une carte d'acquisition d'images 6 (« grabber » en anglais), un calculateur 7 (pour le traitement des images) et une carte entrée/sortie (E/S) qui est compatible ERTMS/ETCS.

Le capteur 100 est posé n'importe où sur le tableau de bord, face au pare-brise de la cabine de pilotage de la locomotive, de la manière la plus stable possible, et la caméra 4 est dirigée vers l'extérieur, en direction de la voie ferrée.

Comme on le verra plus en détail par la suite, le capteur 100 est destiné à mesurer la vitesse et la « distance parcourue » par simple analyse de la trajectoire du véhicule et du défilement dans l'image des objets situés le long de la voie.

Pour ce faire, le schéma fonctionnel, illustré sur la figure 2, décompose le capteur 100 en un système de vision SV et un système de suivi SS, qui, reliés tous deux au calculateur 7, traitent les informations extraites des images capturées par la caméra 4.

Le système de vision SV comprend une carte d'acquisition 6 (ou grabber) d'images capturées par la caméra 4, qui peut être une caméra CCD (pour « charge-coupled device en anglais, ou « dispositif de transfert de charge » en français) par exemple. Il n'est pas exclu de pouvoir stocker ces images dans une mémoire de stockage (non représentée) reliée au calculateur 7, mais le caractère itératif du procédé de l'invention nécessite de ne garder en mémoire que deux images successives, dites « image courante » et « image précédente », filtrées de toute information non pertinente.

Le capteur 100 est rendu complètement autonome du fait qu'il intègre un système de suivi SS capable de détecter et de corriger d'éventuelles erreurs de suivi de voie et d'objets situés le long de la voie, ces erreurs étant dues à la simplicité volontairement choisie des modèles mis en oeuvre dans l'estimation de vitesse et de position du train. Dans une alternative, le système de suivi SS peut remplacer partiellement ou complètement le conducteur en intégrant un système de contrôle SC du train 200.

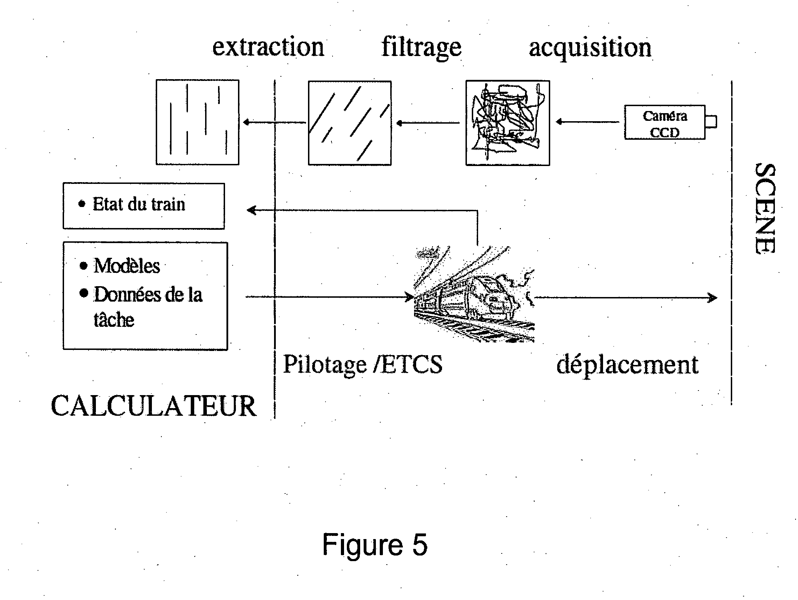

Dans cet exemple, illustré sur la figure 5, le calculateur 7 du capteur 100 utilise des algorithmes issus de modèles génériques du couple train-caméra et de l'environnement ferroviaire, et enfin d'éléments dynamiques de l'ensemble voie/train comme les données relatives à la tâche à exécuter (rouler sur la voie de chemin de fer en l'occurrence). En fonctionnement, le calculateur 7 reçoit, directement ou indirectement, des informations sur l'état courant du train 200 (informations proprioceptives) et de la voie ferrée (informations extéroceptives). Seuls diffèrent les paramètres qui caractérisent le train 200 en particulier, la caméra 4, et l'environnement ferroviaire dans lequel le train 200 circule.

En l'absence de capteurs proprioceptifs, l'état du train est déduit de l'analyse du mouvement de défilement dans l'image de l'environnement ferroviaire (voie, poteaux le long de la voie, etc).

A partir de ces paramètres stockés dans une mémoire de stockage, et des informations sur l'état courant du train 200 et de l'environnement ferroviaire, fournies par le système de vision SV et, dans une alternative, le système de contrôle SC, le calculateur 7 traite les images, issues de la caméra 4 et du système de vision SV, et détermine la vitesse et la « distance parcourue » du train 200 à l'aide du système de suivi SS-.

Les modèles (ou représentations), qui sont utilisés dans l'estimation de vitesse et de « distance parcourue » selon le principe de l'invention, et détaillés ci-après, nécessitent des hypothèses simplificatrices. Celles-ci peuvent être classées en deux catégories :
- connaissance a priori de la scène (éléments constants) : écartement de 1, 435m sur une voie normale en Belgique, verticalité privilégiée du fait de la pesanteur dans une scène structurée, nombre constant d'images à traiter par seconde ;
- comportement du train attendu (éléments bornés) : virages à grands rayons de courbure localement constants, voie de chemin de fer localement plane, faibles mouvements de roulis et de tangage du train.

### 6.3 Modèle géométrique du véhicule

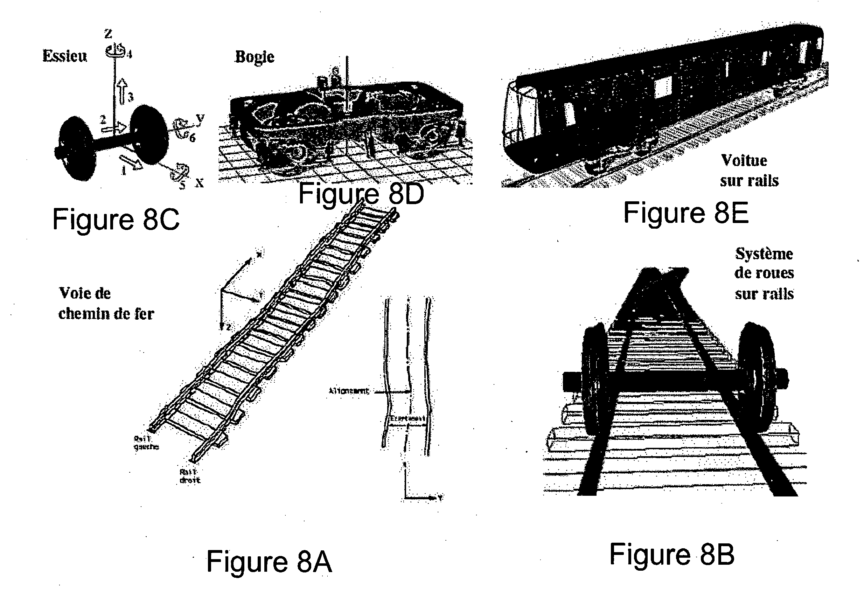

Le modèle du véhicule est spécifique au train dans lequel est disposé le dispositif capteur de l'invention (figures 8B à 8E). La locomotive peut être représentée simplement dans le plan, selon un modèle filaire, par un segment reliant le centre de rotation de ses deux boggies. En effet, la locomotive est un véhicule guidé par les rails de roulement de la voie ferrée, et sa configuration spatiale dépend donc de sa position sur le réseau.. L'angle de direction du véhicule par rapport à la tangente à la courbe d'alignement de la voie dépend de la distance réelle entre ses boggies. Tout au long du parcours sur la voie, les boggies sont, par hypothèse, toujours perpendiculaires à la tangente du fil des rails. Le centre de rotation de chacun des deux boggies, situé sur la même médiane longitudinale de la locomotive, décrit approximativement, l'un après l'autre, la même courbe d'alignement située à égale distance entre les deux rails de la voie ferrée.

La caméra est posée sur le tableau de bord de la cabine de pilotage, et dirigée vers l'extérieur, devant le boggie de tête, dans le prolongement du segment qui modélise la locomotive. Sa position et sa direction sont supposées ne pas évoluer, ou très peu, dans le repère lié à la locomotive.

L'opération de calibrage, qui revient à décrire le processus de formation des images prise par la caméra, est effectuée au moyen du modèle de sténopé, le plus simple et le plus couramment utilisé en traitement d'images.

La projection perspective du modèle 3D de la voie ferrée déforme ce dernier de telle sorte que ses asymptotes convergent dans le plan image vers un seul point appelé « point de fuite ».

L'extraction de ce point permet de retrouver l'attitude de la locomotive dans l'espace réel.

En outre, la hauteur de la caméra est fonction de celle de la locomotive et du tableau de bord. Il est possible de s'affranchir en partie de cette dépendance de connaissance a priori, notamment de la position de la caméra dans la cabine de la locomotive, en prévoyant une calibration automatique de la caméra par le biais du dispositif d'auto-calibrage 9 (visible sur la figure 1).

Certains paramètres dimensionnels, voire comportementaux, du train devront tout de même être saisis afin de configurer le système, comme par exemple la distance entre les boggies et l'accélération/décélération maximale du train.

### 6.4 Modèle géométrique de la caméra

La caméra est modélisée à partir d'hypothèses simplificatrices décrites comme suit. Les paramètres intrinsèques de la caméra sont constants. L'angle d'inclinaison α de la caméra est faible (<10°). L'angle de déviation horizontale ψ, par rapport à la direction principale de la voie, est faible (<10°). L'angle de rotation θ de la caméra par rapport à son axe de visée correspond à l'angle du plus grand nombre de pixels dans l'image, calculé par filtrage de Deriche modifié, comme discuté par la suite. La hauteur z0 de la caméra est constante.

### 6.5 Modèle géométrique de la voie (figure 8A)

La voie de guidage en milieu ferroviaire possède des caractéristiques qui permettent d'émettre certaines hypothèses, notamment sur son infrastructure du fait de la vitesse des trains. La voie ferrée est localement plane, et sa courbure C est localement constante. La largeur e de la voie ferrée est constante et connue (elle correspond à l'écart entre les deux rails). Les rails sont des lignes continues de largeur L constante et connue. Le changement de voie suit une courbe de raccordement de voie, appelée courbe de servitude en spirale (spirale de Cornu ou clothoïde), afin de réduire les effets de force centrifuge que pourraient subir les passagers. La perspective frontale fait que les arêtes horizontales et verticales sont parallèles entre elles. Les caractéristiques géométriques des poteaux d'une même série le long des voies sont constantes (espacement entre deux poteaux consécutifs, distance par rapport à la voie, largeur, hauteur, forme).

### 6.6 Modèle de l'environnement ferroviaire

La connaissance a priori de la scène en milieu ferroviaire, par pays traversé, impose la saisie de certains paramètres, tels que l'écart entre rails, afin de configurer le dispositif de l'invention.

### 6.7 Calcul de la vitesse et de la distance parcourue par le train par reconnaissance et localisation d'indices visuels

Comme mentionné ci-dessus, le dispositif de l'invention met en oeuvre un système de vision qui comprend une caméra vidéo dont le mode de perception se rapprocherait davantage du modèle humain en termes de vision, d'équilibre, d'interprétation de scène, d'analyse de mouvement dans l'image et de prise de décision, mais dont les limites de fonctionnement seraient définies par la technologie existant sur le marché. L'interprétation des données, que la caméra vidéo délivre, en est grandement simplifiée par rapport aux solutions mettant en oeuvre un ou plusieurs capteurs d'odométrie.

Pour des images de scène acquises dans un environnement structuré, ferroviaire en l'occurrence, les droites verticales, qui en sont extraites, sont fréquentes et constituent des caractéristiques dont les propriétés se conservent tout au long d'une même séquence. Dans une mise en oeuvre particulière, la mise en correspondance de ces droites verticales peut être réalisée par une méthode basée sur la corrélation par exemple (qui de manière connue permet d'établir une mise en correspondance entre des points ou des zones d'intérêt extraits de deux images successives).

Afin d'être certain qu'une verticale dans l'image corresponde bien à une arête verticale d'un objet de la scène, sans connaître la position angulaire de la caméra dans un repère absolu fixe, l'idée est d'extraire non pas les droites verticales de l'image, mais celles dont la direction est la plus représentée dans l'image et assimilée à la direction de la pesanteur.

Le dispositif de l'invention utilise alors un filtre de détection de la direction la plus représentée dans l'image, sous la forme d'un filtre de Deriche modifié, dans lequel seuls les contours ayant le même gradient directionnel seront retenus. Ainsi, certaines des caractéristiques, ou primitives, en mouvement dans l'image, matérialisées dans des zones d'intérêt particulières, sont des segments de droites extraits préalablement selon une direction privilégiée, déterminée par un filtre de Deriche modifié, dont les fonctions initiales sont l'estimation du gradient et l'extraction de contours.

La modification d'un tel filtre a permis non seulement d'extraire dans l'image les contours des objets verticaux constituant la scène, mais aussi de calculer l'angle du plus grand nombre de pixels dans l'image. La valeur de cet angle est communiquée à un système matériel ou logiciel de rotation d'image, afin de stabiliser cette dernière, par dérotation, et de fournir au dispositif de l'invention, donc au train, une référence interne propre sur la base de l'hypothèse de verticalité.

En d'autres termes, le filtre de Deriche modifié permet d'extraire les pixels dont la direction du gradient est la plus rencontrée dans l'image, et d'utiliser cette propriété pour assurer la stabilité de l'image face aux perturbations mécaniques rotationnelles que subit la caméra.

Il est à noter que l'extraction des primitives pertinentes met en oeuvre une étape de passage d'une image en niveaux de gris vers une image binaire (noir et blanc), qui ne contient plus que les contours. La complexité des algorithmes par rapport à ceux qui traitent des images brutes est grandement simplifiée.

Dans une alternative, la phase de dérotation, qui redresse l'image suivant un angle calculé à partir du filtre de Deriche modifié, précède la phase qui extrait cette fois-ci directement des contours verticaux des éléments de l'image.

Cette solution est mise en oeuvre préférentiellement dans le dispositif de l'invention, de telle sorte qu'une verticale dans la scène visuelle (image) corresponde bien à une verticale dans la scène réelle (voie ferrée).

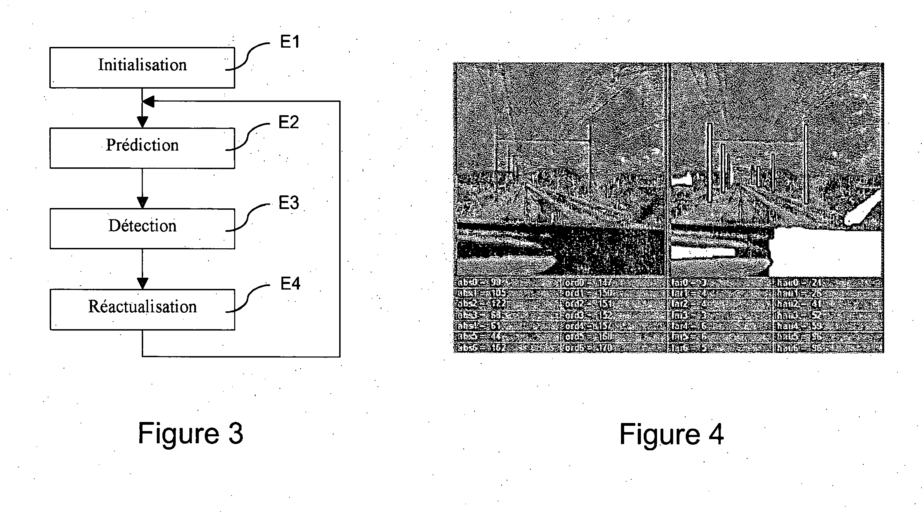

Considérant cette hypothèse comme acquise, des zones d'intérêt matérialisent des droites verticales à partir des contours extraits préalablement de l'image (figure 4). Pour ce faire, une phase de reconnaissance et de localisation devra suivre celle d'extraction afin d'attribuer chaque point retenu à sa droite respective.

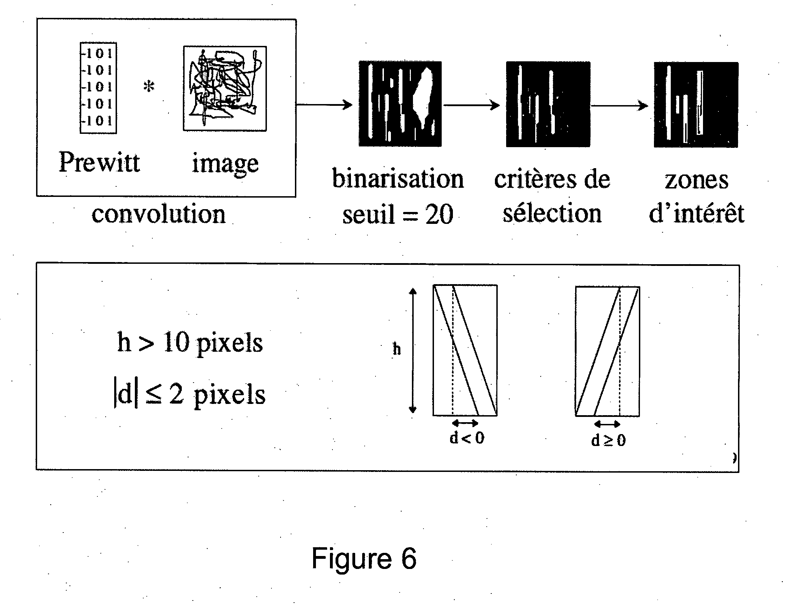

Une méthode consiste à utiliser un masque de convolution de type Prewitt (d'approximation du gradient en x) afin de mettre en évidence les bords verticaux présents dans l'image (figure 6). Une telle convolution est suivie d'un seuillage, la valeur de seuil étant par exemple de 20, et d'une binarisation dans laquelle les points qui sont conservés ont un niveau de gris égale à 255.

Le résultat obtenu est un relevé grossier des composantes verticales de l'image de la scène et non uniquement des contours. Une étape intermédiaire consiste à ne retenir que certains points, regroupés par colonne, de largeur égale à un pixel, dans des suites non interrompues de plus de 10 pixels. Cette étape intermédiaire permet d'éliminer les points isolés et les séquences de points trop courtes. Ces alignements de points s'assemblent à leur tour, se collent les uns contre les autres, pour finalement s'affilier à des structures bornées en largeur et en hauteur.

Cette limitation spatiale est représentée par un rectangle dont la direction est verticale et la position déterminée par les coordonnées dans l'image du coin supérieur gauche. Après avoir distingué les verticales les unes des autres, le programme de localisation conserve uniquement celles qui répondent aux critères suivants :
- une hauteur suffisante (h>10 pixels) ;
- une inclinaison limite à ne pas dépasser (|d| < ou égale à 2 pixels).

### 6.8 Détection des rails de la voie

Le choix du modèle de la voie de guidage, le principe de la projection perspective de celle-ci dans l'image, le contraste des traits continus formés par les rails dans l'image, et enfin la contrainte temps réel sur l'application même de l'invention, font qu'une méthode efficace et rapide de détection des rails consisterait à utiliser comme régions de traitement, non pas des zones d'intérêt polygonales, comme c'est le cas pour l'extraction des caractéristiques verticales vue ci-dessus, mais de simples lignes horizontales dont le nombre et la disposition dans l'image sont définis, et ajustés à chaque itération, en fonction de certains critères, comme la vitesse mesurée du train, la qualité des informations de l'image (entropie), l'écart de hauteur entre le point de fuite de la voie et la ligne d'horizon dans l'image, la courbure mesurée de la voie, etc.

Ce procédé de traitement de signal est tout à fait approprié aux besoins de détection rapide, en comparaison des méthodes plus traditionnelles, compte tenu de la très faible quantité de pixels à traiter. Il se base sur le principe que, dans une même séquence d'images en contexte ferroviaire, la dispersion des niveaux de gris de la voie (écart type) est supposée être la même à proximité et de part et d'autre des rails sur toutes les lignes horizontales de détection.

Il suffit alors de déterminer l'écart type de la fonction de distribution en niveaux de gris sur la ligne de détection la plus représentative (la plus proche de la caméra, c'est-à-dire la plus basse dans l'image). Puis, dans chacune des lignes horizontales de détection, la fonction de distribution est lissée par filtrage gaussien et réduite aux seuls points dont la valeur dépasse un certain seuil adaptatif, défini par la moyenne de la fonction de distribution à laquelle est ajoutée la valeur de l'écart type calculée précédemment.

Cette technique, connue dans le cadre du traitement d'images, permet de s'affranchir de manière simple et fiable des variations d'éclairement qui peuvent se manifester dans une même image.

Le gradient de la fonction de distribution résultante détermine alors les bords gauche et droit de la trace laissée par chacun des rails de la voie.

Dans une alternative, il est tout à fait envisageable de borner spatialement la fonction de distribution en niveaux de gris à proximité de la voie, de telle sorte que la ligne horizontale de détection se réduise à un simple segment. Il est également possible d'attribuer un segment de détection différent à chaque rail, par ligne horizontale de détection, dans les cas où la qualité de l'image serait dégradée entraînant une perte partielle de l'information, par exemple.

### 6.9 flot optique

A chaque acquisition d'image, les indices visuels utiles sont reconnus et localisés, puis mis en correspondance avec leur homologue de l'image précédente d'une même séquence, afin d'estimer leur mouvement apparent dans l'image, ou flot optique.

Le flot optique, c'est-à-dire le champ des vitesses instantanées des niveaux de gris dans l'image (ou champ de mouvement) est une représentation 2D d'un mouvement 3D. A chaque point de cette représentation est attribué un vecteurs vitesse correspondant à une direction de mouvement, une vitesse du mouvement et une profondeur.

Au lieu de calculer le flot optique par les changements temporels de l'intensité de l'image, il est possible de considérer aussi les changements temporels de valeurs qui sont le résultat d'opérateurs locaux divers, tels que le contraste, l'entropie, la moyenne et les dérivées spatiales de l'intensité de l'image. Dans chaque cas, un champ de flot optique relativement dense est estimé, déterminant ainsi le champ de mouvement, à chaque pixel de l'image si nécessaire. Mais le flot optique ne correspond jamais au vrai champ de mouvement, car les changements d'illumination, sa principale source d'erreur, se répercutent dans le calcul.

Le flot optique est alors utilisé conjointement avec des contraintes supplémentaires, ou une information concernant la scène, afin de déterminer les paramètres de mouvement 3D des objets dans la scène.

### 6.10 Modèle linéaire de projection perspective de la voie

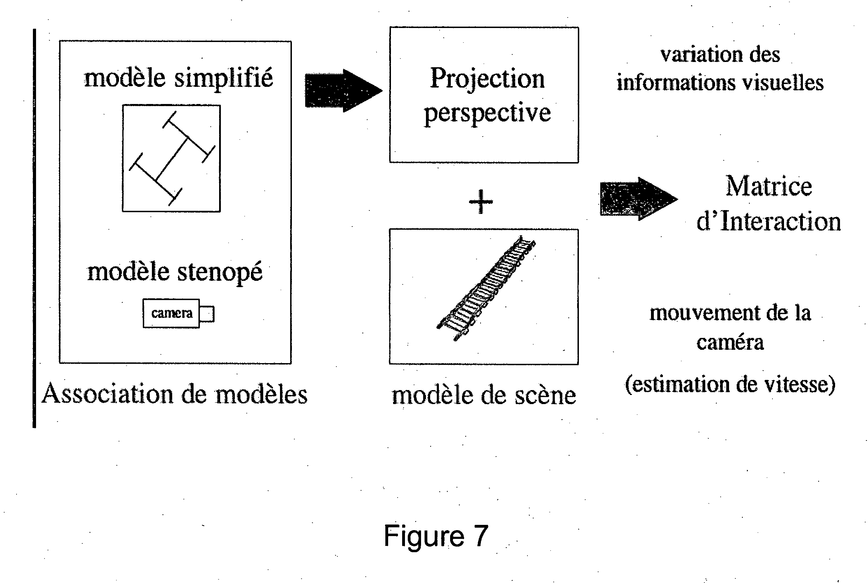

Dans la relation de dualité existant entre la scène réelle et l'image (scène visuelle), l'association des modèles locomotive-caméra (figure 7) permet d'identifier les coordonnées du centre de projection et du centre du plan image dans le repère absolu. Les coordonnés de la projetée dans le plan image d'un point quelconque de la scène lié à la caméra sont exprimées dans le repère absolu puis dans le repère lié à la caméra.

La difficulté se situe dans la modélisation de la scène et l'expression de la matrice d'interaction, qui exprime la relation entre les variations des informations visuelles dans l'image et les mouvements de la caméra dans l'espace réel.

D'une manière générale, la modélisation adoptée utilise un formalisme très simple qui met en oeuvre uniquement des paramètres dynamiques de l'ensemble voie/véhicule intervenant linéairement dans l'espace du plan image.

Le suivi par filtrage de Kalman des paramètres caractérisant la projection simplifiée des rails gauche et droit permet l'estimation simultanée de la vitesse de défilement des objets pertinents situés le long de la voie ferrée.

La vitesse et la «distance parcourue» du train sont enfin calculées par projection perspective inverse, qui permet la reconstruction tridimensionnelle d'un modèle de voie de chemin de fer simplifié, en tenant compte de la connaissance a priori des valeurs réelles de certaines grandeurs géométriques caractéristiques de l'ensemble voie/véhicule et spécifiques au pays et au véhicule (écart entre rails, longueur du véhicule).

Compte tenu de ces hypothèses, les paramètres candidats à la modélisation de l'évolution linéaire de l'ensemble voie-véhicule sont par exemple :
- C : courbure locale de la voie ferrée ;
- ψ: angle de déviation horizontale de l'axe optique par rapport à la direction principale de la voie ferrée ;
- x0 : abscisse du centre de projection de la caméra par rapport à la courbe d'alignement de la voie ferrée.

Ces paramètres ainsi que la vitesse et la « distance parcourue » du train sont calculés et réactualisés très simplement à chaque détection de rail dans l'image.

### 6.11 Algorithme de suivi de la voie ferrée

### a) Contrôle du mouvement basé sur l'information visuelle

Pour un itinéraire donné, un train en mouvement se déplace selon une direction définie par l'aiguillage des rails de chemin de fer, tandis que sa vitesse et son accélération sont contrôlées par le conducteur, qui assure le pilotage, avec l'intervention de l'ETCS pour la partie sécuritaire (freinage d'urgence).

Selon l'invention, le contrôle du mouvement du système de vision équipant la locomotive est réalisé en adaptant à l'industrie ferroviaire un algorithme de commande par asservissement visuel en milieu structuré.

Entre deux acquisitions d'images consécutives de la caméra, à l'instar des mesures de capteurs traditionnellement utilisés en contexte ferroviaire, le véhicule se déplace d'un point à un autre en aveugle (structure Look-and-Move). Par contre, les consignes ne sont plus exprimées sous forme de situation entre le capteur (ici la caméra) et la scène, comme c'est le cas pour les algorithmes d'analyse de scène, dans lesquels la position, la vitesse et l'accélération sont des notions de situations représentées dans un repère absolu, mais sous la forme d'un motif à atteindre dans l'image. Dans ce type d'algorithme utilisé par l'invention, les informations visuelles choisies pour constituer ce motif doivent atteindre les valeurs qui correspondent à une bonne réalisation de la tâche attribuée au véhicule.

Les travaux ayant abouti à ce formalisme contiennent des boucles de suivi qui utilisent des informations visuelles, issues de caractéristiques image les plus simples (points, segments de droites). Cette approche permet de s'affranchir complètement de la phase d'interprétation (c'est-à-dire de reconstruction du modèle 3D de la scène) et de diminuer considérablement le temps de calcul car les informations extraites de l'image sont directement utilisées dans la boucle de suivi. Cela élimine aussi les erreurs d'estimation de la situation et les calculs compliqués. Ils utilisent des caractéristiques (géométrie, topologie) de certaines zones de la scène qui restent essentiellement stables tout au long de l'évolution du véhicule.

La contrainte de disposer en permanence d'une mesure fiable et disponible de la vitesse et de la « distance parcourue » du train en mouvement nous amène à mettre en oeuvre un système de suivi et de prédiction, par filtrage de Kalman, d'un ensemble de notions, telles que les zones d'intérêt et certaines caractéristiques géométriques de la voie ferrée (rayon de courbure, écartement, alignement), dont le comportement est connu a priori via des modèles et dont l'estimation précédente est encore en mémoire.

### b) Suivi de la voie ferrée

L'approche, qui est basée sur le principe de la figure 3, comprend ainsi une étape E1 d'initialisation du modèle, une étape E2 de prédiction par le modèle de la position des zones de détection, une étape E3 de détection du rail dans chacune des zones et une étape E4 de réactualisation des paramètres du modèle en fonction de la position des morceaux de rail détectés.

L'initialisation (E1) permet de fixer a priori les paramètres du modèle.

La phase de prédiction (E2) permet de positionner les zones d'intérêt de l'image où seront détectés les rails et les objets le long de la voie. Cette opération est réalisée grâce au modèle de l'ensemble voie/véhicule calculé à l'itération précédente.

En connaissant la courbure de la voie, il est facile de prédire la position des rails et des objets dans l'image. En fixant autour de cette position une zone de recherche, suffisamment large, tenant compte des erreurs de modélisation dues aux approximations et de la vitesse calculée à l'itération précédente, la présence du rail et celle d'un objet pourront être détectées.

La recherche dans une zone d'intérêt de l'image (c'est-à-dire une portion de l'image) d'un ou plusieurs indices représentatifs d'au moins une caractéristique géométrique de la voie de guidage et/ou d'au moins un objet situé le long de la voie de guidage permet de simplifier le traitement.

C'est la phase de détection (E3) qui permet la localisation des rails et des objets dans les zones prédites. Les rails peuvent être détectés par des méthodes classiques à partir de zones d'intérêts de formes polygonales ou linéaires, ou sur toute l'image, par extraction de leurs contours (segmentation au sens contour) ou de la structure de la voie (segmentation au sens région selon critère sur la texture) puis par comparaison avec un modèle bidimensionnel de voie.

Les rails à détecter étant de nature particulière (continus, suffisamment contrastés et couvrant plus de la moitié de l'image), l'application temps réelle impose le choix d'effectuer des détections à partir de simples lignes horizontales espacées dans l'image. Une méthode consiste à utiliser un faible nombre de lignes de détection choisies en fonction de la vitesse mesurée.

La réactualisation des paramètres du modèle (E4) est effectuée, à partir des mesures précédentes, par filtrage de Kalman (minimisation aux moindres carrés).

En d'autres termes, le dispositif de l'invention privilégie des modèles simples mais très rapides d'exécution et compense les erreurs de modélisation par un système de suivi et de prédiction dans l'image par filtrage de Kalman (un filtre de Kalman permet de suivre et de prédire un ensemble de notions extraites de l'image, à partir des contours des objets). Le filtre de Kalman a deux phases distinctes, à savoir une phase de prédiction (E2) et une phase de mise à jour (E4). La phase de prédiction utilise l'état estimé de l'instant précédent pour produire une estimation de l'état courant. Dans l'étape de mise à jour, les observations de l'instant courant sont utilisées pour corriger l'état prédit dans le but d'obtenir une estimation plus précise.

### 6.12 Mouvement apparent dans l'image (Couloir de navigation)

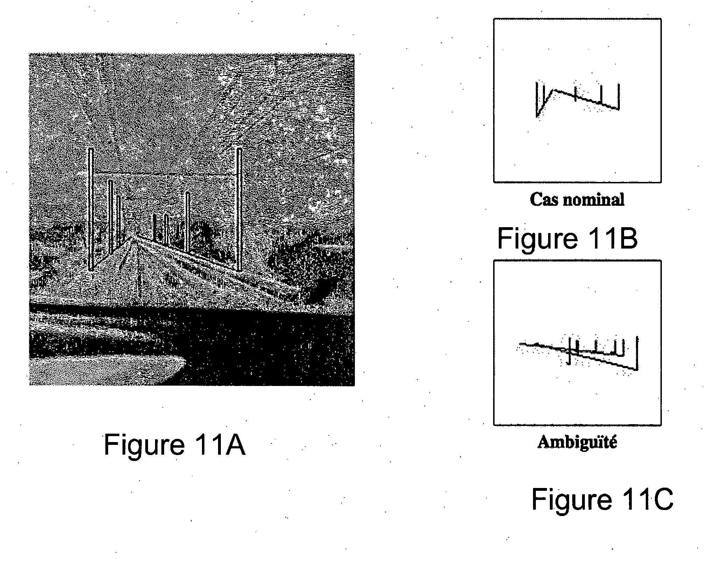

L'infrastructure située de chaque côté des rails, le long de la voie empruntée par la locomotive, est représentée par des verticales (figure 11A). Un couloir de navigation est défini par le mouvement apparent dans l'image de l'extrémité inférieure des deux verticales les plus proches de la caméra (figure 11B).

Dans le cas du ferroviaire, le couloir de navigation résulte directement du modèle préexistant de la voie ferrée et se projette sur le plan image de la caméra à bord de la locomotive en mouvement.

L'interprétation de l'information délivrée par les deux vecteurs de déplacement dans l'image pose un problème quand ces derniers ont une pente de même signe. En effet, une analyse succincte ne permet pas, dans ce cas, de déterminer de façon précise que ces deux vecteurs représentent bien le mouvement apparent d'objets (poteaux) appartenant à des bords opposés de la voie ferrée. C'est pourquoi, dans le cas d'une ambiguïté (figure 11C), il est préférable de ne tenir compte que de la verticale la plus proche de la caméra pour représenter le couloir de navigation.

### 6.13 Autres aspects et variantes

Dans un mode de réalisation de l'invention, le dispositif de l'invention met en oeuvre un module d'affichage d'un ou plusieurs éléments structurants de l'environnement dans lequel le véhicule se déplace, et qui ont servi au calcul de la vitesse et de la distance parcourue du véhicule se déplaçant sur une voie de guidage.

Ce module d'affichage est, par exemple, un écran LCD qui est particulièrement adapté aux activités de surveillance de l'environnement.

Dans une variante, l'image de l'ensemble des objets virtuels peut être projetée ou incrustée sur le pare-brise du véhicule ou sur un miroir transparent situé devant le pare-brise (on parle d'affichage tête haute ou de collimateur tête haute) de façon à constituer une aide à la conduite aux conditions particulières de visibilité, de vitesse, d'encombrement réseau, etc.

En d'autres termes, le module d'affichage permet d'afficher des éléments pertinents extraits directement de la scène ainsi que des éléments supplémentaires issus de traitements sur les éléments pertinents, et constitue par exemple une aide à la conduite (c'est-à-dire qu'il permet au conducteur de prendre des décisions). Ces éléments supplémentaires fournissent au conducteur des informations sur l'environnement qui défile devant lui. Ces informations peuvent être géométriques, comme par exemple des droites et des courbes reliant deux objets différents dans l'image, et/ou numériques, comme par exemple des données telles que la valeur de la vitesse et/ou de la position du véhicule (ces éléments peuvent éventuellement s'afficher lorsque le conducteur appuie sur un bouton), et/ou de toute autre nature.

Il est à noter que le principe de l'invention ne s'applique pas uniquement aux véhicules roulants sur une voie de guidage, mais plus généralement aux véhicules se déplaçant le long d'une voie de guidage (train à sustentation magnétique par exemple).

Par ailleurs, le principe de l'invention décrit dans le mode de réalisation ci-dessus s'applique également dans les cas où l'appareil de capture n'est pas un appareil de prise de vues, mais une caméra thermique, une caméra magnétique, ou de tout autre type.

Il est à noter que le principe de traitement de l'information visuelle par le dispositif de l'invention tel que décrit précédemment peut être mis en oeuvre non plus pour mesurer la vitesse et la distance parcourue par un véhicule mobile se déplaçant sur une voie de guidage, mais dans le but de positionner un véhicule mobile à tout moment sur n'importe quel réseau de transport routier, ferroviaire ou fluvial, dans la mesure où celui-ci est structuré et connu a priori sous forme de cartes et possède in-situ des indications de localisation et de direction en tout genre (bornes, panneaux, etc).

Cette application du dispositif de l'invention permet, dans une mise en oeuvre particulière, une navigation par itinéraire dont les points de passage successifs sont des référentiels locaux (ou relatifs) dans lesquels le véhicule se déplace et est localisé. Une fois qu'un point de passage «k» est franchi, un nouveau point de passage « k+1 » prend le relai et constitue le nouvel objectif à atteindre.

Cette solution de positionnement constitue une alternative au système GPS qui présente de nombreux inconvénients. En effet, le calcul du positionnement par le biais du système GPS dépend en permanence de la qualité de la réception des signaux satellitaires, qui peuvent être interrompus ou perturbés par une cause extérieure de mauvaise réception (tunnel, couloir, relief, parasite, orage, forte humidité), par un brouillage radioélectrique volontaire ou non, par une manoeuvre au cours de laquelle la réception est temporairement masquée, par l'alignement momentané de quelques satellites qui empêche le calcul précis (incertitude géométrique temporaire), ou par un incident dans un satellite.

De façon avantageuse, cette application particulière du dispositif de l'invention constitue un système autonome de planification d'itinéraires et de navigation dans un réseau de transport structuré connu et cartographié a priori. Ce système calcule la localisation du véhicule dans lequel il est placé selon les mêmes principes matériel et logiciel que le dispositif de l'invention tel que décrit précédemment, relativement à des caractéristiques et des repères physiques qui, en plus de leur position dans le réseau de transport, recèlent des informations sur la direction à suivre, la topologie du parcours ou le comportement à adopter (sens du virage, limitation de vitesse, feu de signalisation).

Cette application s'inspire du langage adopté par les co-pilotes de rallye sur la base de cartes connues a priori, pour un itinéraire donné. Sa mise en oeuvre peut comprendre un service de mise à jour de cartes de réseaux de transport et un service de planification cartographique de parcours incluant des informations en temps réel sur le trafic.

Cette application met en oeuvre de préférence un module d'affichage, comme celui précité, et un signal sonore donnant à l'utilisateur des indications sur une direction à suivre ou une vitesse à ne pas dépasser, par exemple.

## Revendications

1. Dispositif (100) de mesure de vitesse et/ou de position d'un véhicule (200) se déplaçant le long d'une voie de guidage, de jour comme de nuit, et ce quelles que soient les conditions climatiques, comprenant:
- au moins un appareil de capture d'images (4) délivrant une séquence d'images numériques d'un environnement dudit véhicule (200) ;
- des moyens de détermination du mouvement apparent d'au moins un indice visuel, appelé primitive, entre deux images délivrées par ledit appareil de capture d'images (4), afin de déterminer le mouvement apparent dudit au moins un indice visuel;
- des moyens d'estimation de vitesse et/ou de la position dudit véhicule (200) à partir dudit mouvement apparent dudit au moins un indice visuel;
**caractérisé en ce que** lesdits moyens de détermination mettent en oeuvre :
- des moyens de simplification desdites images, à l'aide d'au moins un modèle dudit environnement, permettant la détection dudit au moins un indice visuel dans les images simplifiées ;
- des moyens de prédiction d'une zone d'image dans laquelle ledit indice visuel se trouvera dans une image suivante ;
- des moyens d'extraction d'un desdits indices visuels dans ladite zone d'image ;
- des moyens d'estimation d'un déplacement, par comparaison de la position réelle dudit indice visuel dans une image courante et une image précédente ;

2. Dispositif (100) selon la revendication 1, **caractérisé en ce que** ledit au moins un appareil de capture d'images (4) appartient au groupe comprenant notamment :
- les appareils de prise de vues ;
- les caméras thermiques ;
- les caméras magnétiques.

3. Dispositif (100) selon la revendication 1 ou 2, **caractérisé en ce que** ledit au moins un indice est représentatif d'au moins une caractéristique géométrique de ladite voie de guidage, telle que le rayon de courbure, l'écartement entre les rails de la voie, l'alignement.

4. Dispositif (100) selon l'une des revendications 1 à 3, **caractérisé en ce que** ledit au moins un indice est représentatif d'au moins une caractéristique géométrique d'au moins un objet situé le long de la voie de guidage, telle que la verticalité des poteaux.

5. Dispositif (100) selon l'une des revendications 1 à 4, **caractérisé en ce qu'**il met en oeuvre un modèle dudit véhicule (200) et un modèle dudit appareil de capture d'images (4).

6. Dispositif (100) selon l'une des revendications 1 à 5, **caractérisé en ce que** les moyens de suivi et de prédiction mettent en oeuvre un filtre de Kalman.

7. Dispositif (100) selon l'une des revendications 1 à 6, **caractérisé en ce qu'**il comprend un capteur d'inclinaison apte à générer un signal représentatif de l'inclinaison dudit appareil de capture d'images (4) et des moyens de rotation d'une image délivrée par ledit appareil de capture d'images (4) selon un angle fonction dudit signal généré.

8. Dispositif (100) selon la revendication 7, **caractérisé en ce que** ledit capteur d'inclinaison met en oeuvre un filtre de Deriche.

9. Dispositif (100) selon l'une quelconque des revendications 1 à 8, **caractérisé en ce qu'**il met en oeuvre une matrice d'interaction liant les mouvements de l'appareil de capture d'images (4) dans l'espace réel aux mouvements dudit au moins indice dans lesdites images.

10. Dispositif (100) selon l'une quelconque des revendications 1 à 9, **caractérisé en ce qu'**il comprend des moyens de calibrage dudit appareil de capture d'images (4).

11. Dispositif (100) selon l'une quelconque des revendications 1 à 10, **caractérisé en ce qu'**il comprend des moyens d'affichage d'images numériques dudit environnement délivrées par ledit appareil de capture d'images (4).

12. Dispositif (100) selon la revendication 11, **caractérisé en ce que** lesdites images sont affichées sur au moins un écran LCD, le pare-brise dudit véhicule, ou sur un miroir transparent situé devant le pare-brise dudit véhicule.

13. Dispositif (100) selon l'une quelconque des revendications 1 à 12, **caractérisé en ce qu'**il comprend des moyens d'entrée d'un itinéraire donné.

14. Dispositif (100) selon la revendication 13, **caractérisé en ce qu'**il comprend des moyens de stockage d'au moins une carte d'un réseau de transport.

15. Dispositif (100) selon la revendication 13 ou 14, **caractérisé en ce qu'**il comprend des moyens d'indication du positionnement géographique dudit véhicule (200).

16. Procédé de mesure de vitesse et/ou de position d'un véhicule (200) se déplaçant le long d'une voie de guidage, de jour comme de nuit, et ce quelles que soient les conditions climatiques, comprenant les étapes suivantes :
- obtention d'une séquence d'images numériques d'un environnement dudit véhicule par le biais d'un appareil de capture d'images (4);
- détermination du mouvement apparent d'au moins un indice visuel, appelé primitive, entre deux images délivrées par ledit appareil de capture d'images (4), afin de déterminer le mouvement apparent dudit au moins un indice visuel;
- estimation de vitesse et/ou de la position dudit véhicule à partir dudit mouvement apparent dudit au moins un indice visuel.
caratérisé en ce que les étapes de détermination du mouvement comprennent les étapes suivantes :
- simplification desdites images, à l'aide d'au moins un modèle dudit environnement, permettant la détection dudit au moins un indice visuel dans les images simplifiées ;
- prédiction d'une zone d'image dans laquelle ledit indice visuel se trouvera dans une image suivante ;
- extraction d'un desdits indices visuels dans ladite zone d'image ;
- estimation d'un déplacement, par comparaison de la position réelle dudit indice visuel dans une image courante et une image précédente ;

17. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé selon la revendication 16 dans le dispositif (100) de l'une quelconque des revendications 1 à 15.

## Patentansprüche

1. Vorrichtung (100) zur Geschwindigkeits- und/oder Positionsmessung eines Fahrzeugs (200), das sich bei Tag oder bei Nacht und ungeachtet der Klimabedingungen entlang einer Führungsspur bewegt, umfassend:
- mindestens ein Bilderfassungsgerät (4), das eine Sequenz digitaler Bilder einer Umgebung des Fahrzeugs (200) liefert,
- Mittel zum Bestimmen der scheinbaren Bewegung mindestens eines visuellen Indizes, der primitiv genannt wird, zwischen zwei von dem Bilderfassungsgerät (4) gelieferten Bildern, um die anscheinende Bewegung des mindestens einen visuellen Indizes zu bestimmen,
- Mittel zur Abschätzung der Geschwindigkeit und/oder Position des Fahrzeugs (200) ausgehend von der anscheinenden Bewegung des mindestens einen visuellen Indizes,
**dadurch gekennzeichnet, dass** jene Bestimmungsmittel Folgendes einsetzen:
- Mittel zur Vereinfachung der Bilder mit Hilfe mindestens eines Modells der Umgebung, welche das Erfassen des mindestens einen visuellen Indizes in den vereinfachten Bildern erlauben,
- Mittel zur Vorhersage einer Bildzone, in der sich das visuelle Indiz in einem darauf folgenden Bild befinden wird,
- Mittel zur Extraktion eines der visuellen Indizien in der Bildzone,
- Mittel zur Abschätzung einer Bewegung durch Vergleich der realen Position des visuellen Indizes in einem aktuellen Bild und einem vorhergehenden Bild.

2. Vorrichtung (100) nach Anspruch 1, **dadurch gekennzeichnet, dass** das mindestens eine Bilderfassungsgerät (4) zu der Gruppe gehört, die insbesondere Folgendes umfasst:
- Bildaufnahmegeräte,
- Wärmebildkameras,
- Magnetfeldkameras.

3. Vorrichtung (100) nach Anspruch 1 oder 2, **dadurch gekennzeichnet, dass** das mindestens eine Indiz für mindestens ein geometrisches Merkmal der Führungsspur repräsentativ ist, wie zum Beispiel für den Krümmungsradius, den Abstand zwischen den Gleisschienen, oder die Ausrichtung.

4. Vorrichtung (100) nach einem der Ansprüche 1 bis 3, **dadurch gekennzeichnet, dass** das mindestens eine Indiz für mindestens ein geometrisches Merkmal mindestens eines Objekts, das entlang der Führungsspur liegt, repräsentativ ist, wie zum Beispiel für die Vertikalität von Pfosten.

5. Vorrichtung (100) nach Anspruch 1 bis 4, **dadurch gekennzeichnet, dass** sie ein Modell des Fahrzeugs (200) und ein Modell des Bilderfassungsgeräts (4) einsetzt.

6. Vorrichtung (100) nach einem der Ansprüche 1 bis 5, **dadurch gekennzeichnet, dass** die Mitverfolgungs- und Vorhersagemittel ein Kalman-Filter umsetzen.

7. Vorrichtung (100) nach einem der Ansprüche 1 bis 6, **dadurch gekennzeichnet, dass** sie einen Neigungssensor umfasst, der dazu geeignet ist, ein Signal zu erzeugen, das für die Neigung des Bilderfassungsgeräts (4) repräsentativ ist, und Mittel zum Drehen eines Bilds, das von dem Bilderfassungsgerät (4) geliefert wird, um einen Winkel als Funktion des erzeugten Signals.

8. Vorrichtung (100) nach Anspruch 7, **dadurch gekennzeichnet, dass** der Neigungssensor ein Deriche-Filter einsetzt.

9. Vorrichtung (100) nach einem der Ansprüche 1 bis 8, **dadurch gekennzeichnet, dass** sie eine Wechselwirkungsmatrix umsetzt, die die Bewegungen des Bilderfassungsgeräts (4) im realen Raum mit den Bewegungen des mindestens einen Indizes in den Bildern verknüpft.

10. Vorrichtung (100) nach einem der Ansprüche 1 bis 9, **dadurch gekennzeichnet, dass** sie Mittel zum Kalibrieren Bilderfassungsgeräts (4) umfasst.

11. Vorrichtung (100) nach einem der Ansprüche 1 bis 10, **dadurch gekennzeichnet, dass** sie Mittel zum Anzeigen digitaler Bilder der Umgebung, die von dem Bilderfassungsgerät (4) geliefert werden, umfasst.

12. Vorrichtung (100) nach Anspruch 11, **dadurch gekennzeichnet, dass** die Bilder auf mindestens einem LCD, auf der Windschutzscheibe des Fahrzeugs oder auf einem durchsichtigen Spiegel, der sich vor der Windschutzscheibe des Fahrzeugs befindet, angezeigt werden.

13. Vorrichtung (100) nach einem der Ansprüche 1 bis 12, **dadurch gekennzeichnet, dass** sie Mittel zur Eingabe einer gegebenen Route umfasst.

14. Vorrichtung (100) nach Anspruch 13, **dadurch gekennzeichnet, dass** sie Mittel zum Speichern mindestens einer Karte eines Transportnetzes umfasst.

15. Vorrichtung (100) nach Anspruch 13 oder 14, **dadurch gekennzeichnet, dass** sie Mittel zur Eingabe der geographischen Positionierung des Fahrzeugs (200) umfasst.

16. Verfahren zur Messung der Geschwindigkeit und/oder Position eines Fahrzeugs (200), das sich bei Tag oder Nacht und ungeachtet der Klimabedingungen entlang einer Führungsspur bewegt, das die folgenden Schritte umfasst:
- Erhalten einer Sequenz digitaler Bilder einer Umgebung des Fahrzeugs anhand eines Bilderfassungsgeräts (4),
- Bestimmen der anscheinenden Bewegung mindestens eines visuellen Indizes, das primitiv genannt wird, zwischen zwei Bildern, die von dem Bilderfassungsgerät (4) geliefert werden, um die anscheinende Bewegung des mindestens einen visuellen Indizes zu bestimmen,
- Abschätzen der Geschwindigkeit und/oder der Position des Fahrzeugs ausgehend von der anscheinenden Bewegung des mindestens einen visuellen Indizes,
**dadurch gekennzeichnet, dass** die Schritte zum Bestimmen der Bewegung die folgenden Schritte umfassen:
- Vereinfachung der Bilder mit Hilfe mindestens eines Modells der Umgebung, das das Erfassen des mindestens einen visuellen Indizes in den vereinfachten Bildern erlaubt,
- Vorhersage einer Bildzone, in der sich das visuelle Indiz in einem darauf folgenden Bild befinden wird,
- Extrahieren eines der visuellen Indizien aus der Bildzone,
- Abschätzen einer Bewegung durch Vergleichen der realen Position des visuellen Indizes in einem aktuellen Bild mit einem vorhergehenden Bild.

17. Computerprogrammprodukt, das von einem Kommunikationsnetz herunterladbar ist und/oder auf einem von einem computerlesbaren Träger gespeichert ist und/oder auf einem Mikroprozessor ausführbar ist, **dadurch gekennzeichnet, dass** es Programmcodeanweisungen zur Ausführung des Verfahrens nach Anspruch 16 in der Vorrichtung (100) irgendeines der Ansprüche 1 bis 15 umfasst.

## Claims

1. Device (100) for measuring the speed and/or position of a vehicle (200) moving along a guideway, by day and by night, in doing so irrespective of the climatic conditions, **characterized in that** it comprises:
- at least one image capturing apparatus (4) delivering a sequence of digital images of an environment of said vehicle (200);
- means for determining the apparent motion of at least one visual cue, called a primitive, between two images delivered by said image capturing apparatus (4), in order to determine the apparent motion of said at least one visual cue, implementing:
- means for simplifying said images by means of at least one model of said environment, enabling the detection of said at least one visual cue in the simplified images;
- means for predicting an image zone in which said visual cue will be situated in a following image;
- means for extracting one of said visual cues in said image zone;
- means for estimating a movement, by comparisng the actual position of said visual cue in a current image and in a previous image;
- means for estimating the speed and/or the position of said vehicle (200) on the basis of said apparent motion of said at least one visual cue.

2. Device (100) according to claim 1, **characterized in that** said at least one image capturing apparatus (4) belongs to the group comprising especially:
- view taking apparatuses;
- thermal cameras;
- magnetic cameras.

3. Device (100) according to claim 1 or 2, **characterized in that** said at least one visual cue is representative of at least one geometrical characteristic of said guideway, such as the radius of curvature, the track gauge, the alignment.

4. Device (100) according to any one of the claims 1 to 3, **characterized in that** said at least one visual cue is representative of at least one geometrical characteristic of at least one object situated along the guideway, such as the verticality of the poles.

5. Device (100) according to any one of the claims 1 to 4, **characterized in that** it implements a model of said vehicle (200) and a model of said image capturing apparatus (4).

6. Device (100) according to any one of the claims 1 to 5, **characterized in that** the means for tracking and prediction implement a Kalman filter.

7. Device (100) according to any one of the claims 1 to 6, **characterized in that** it comprises a tilt sensor adapted to generate a signal representative of the inclination of said image capturing apparatus (4) and means for rotating an image delivered by said image capturing apparatus (4) at an angle that depends on said signal generated.

8. Device (100) according to claim 7, **characterized in that** said tilt sensor implements a Deriche filter.

9. Device (100) according to any one of the claims 1 to 8, **characterized in that** it implements an interaction matrix linking the motions of the image capturing apparatus (4) in the real space with the motions of said at least one cue in said images.

10. Device (100) according to any one of the claims 1 to 9, **characterized in that** it comprises means for calibrating said image capturing apparatus (4)).

11. Device (100) according to any one of the claims 1 to 10, **characterized in that** it comprises means for displaying digital images of said environment delivered by said image capturing apparatus (4).

12. Device (100) according to claim 11, **characterized in that** said images are displayed on at least one LCD screen, on the windshield of said vehicle or on a transparent mirror situated before the windshield of said vehicle.

13. Device (100) according to any one of the claims 1 to 12, **characterized in that** it comprises means for inputting a given route.

14. Device (100) according to claim 13, **characterized in that** it comprises means for storing at least one map of a transportation network.

15. Device (100) according to claim 13 or 14, **characterized in that** it comprises means for indicating the geographic position of said vehicle (200).

16. Method for measuring speed and/or position of a vehicle (200) moving along a guideway, by day and by night, irrespective of the climatic conditions, **characterized in that** it comprises the following steps:
- obtaining a sequence of digital images of an environment of said vehicle by means of an image capturing apparatus (4);
- determining the apparent motion of at least one visual cue, called a primitive, between two images delivered by said image capturing apparatus (4), in order to determine the apparent motion of said at least one visual cue comprising the following steps:
- simplifying said images by means of at least one model of said environment, enabling the detection of said at least one visual cue in the simplified images;
- predicting an image zone in which said visual cue will be in a following image;
- extracting one of said visual cues in said image zone;
- estimating a movement by comparing the actual position of said visual cue in a current image and a previous image ;
- estimating speed and/or position of said vehicle from said apparent motion of said at least one visual cue.

17. Computer program product downloadable from a communications network and/or stored on a computer-readable medium and/or executable by a microprocessor, **characterized in that** it comprises program code instructions for the execution of the method according to claim 16 in the device (100) of any one of the claims 1 to 15.
